# EUROPÄISCHE PATENTANMELDUNG

(11) **EP 2 311 772 A1**
(43) Veröffentlichungstag der Anmeldung: **20.04.2011**
(21) Anmeldenummer: 10011238.2
(22) Anmeldetag: 28.09.2010
(51) Int. Cl.: B66F 9/075, B60B 33/00, B62B 3/06

(54) **Flurförderzeug, insbesondere Hubwagen**

(30) Priorität: 16.10.2009 DE 102009049666; 06.11.2009 DE 102009053160
(71) Anmelder: OM Carrelli Elevatori S.p.A., 20020 Lainate (MI) (IT)
(72) Erfinder: Mariotti, Fabio, 42016 Guastalla (RE) (IT); Castagnoli, Fabrizio, 46029 Suzzara (MN) (IT)
(74) Vertreter: Geirhos, Johann

(57) **Zusammenfassung**

Die Erfindung betrifft ein Flurförderzeug (1), insbesondere Hubwagen, mit einem Antriebsrad und zumindest einer von dem Antriebsrad seitlich beabstandeten Stützrolle (6a; 6b), wobei die Stützrolle (6a; 6b) um eine horizontale Drehachse (D) drehbar in einer Schwinge (10) gelagert ist, die um eine Schwenkachse (S) schwenkbar in einem Drehschemel (11) gelagert ist, und die Stützrolle (6a; 6b) mittels eines elastischen Kunststoffelements (20), insbesondere eines Elastomerelements, an dem Drehschemel (11) federnd abgestützt ist und das Kunststoffelement (20) zwischen der Schwinge (10) und dem Drehschemel (11) angeordnet ist. Erfindungsgemäß ist zwischen der Schwinge (10) und dem Drehschemel (11) eine metallische Feder (22), insbesondere eine Stahlfeder, angeordnet.

## Beschreibung

Die Erfindung betrifft ein Flurförderzeug, insbesondere Hubwagen, mit einem Antriebsrad und zumindest einer von dem Antriebsrad seitlich beabstandeten Stützrolle, wobei die Stützrolle um eine horizontale Drehachse drehbar in einer Schwinge gelagert ist, die um eine Schwenkachse schwenkbar in einem Drehschemel gelagert ist, und die Stützrolle mittels eines elastischen Kunststoffelements, insbesondere eines Elastomerelements, an dem Drehschemel federnd abgestützt ist, wobei das Kunststoffelement zwischen der Schwinge und dem Drehschemel angeordnet ist.

Flurförderzeuge der genannten Art sind meist als Niederhubwagen, Hochhubwagen, Schlepper, Niederhub- oder Hochhubkommissionierer ausgeführt. Diese Flurförderzeuge können im Mitgängerbetrieb bzw. im Mitfahrerbetrieb betrieben werden, wobei für den Mitgängerbetrieb eine feste oder klappbare Fahrerstandplattform vorgesehen sein kann. Der Antriebsteil stützt sich mit einem Antriebsrad, das vorzugsweise vertikal starr am Flurförderzeug befestigt ist, und zumindest einer Stützrolle, die vertikal bewegbar und drehbar am Antriebsteil gelagert ist, auf der Fahrbahn ab. Die Stützrolle ist nicht angetrieben und wird in der Regel nicht gebremst. Der Lastteil eines derartigen Flurförderzeugs ist mittels zweier Lastrollen auf dem Boden abgestützt. Hierbei sind Bauformen mit einem Vierradfahrwerk bekannt, bei denen das Antriebsrad seitlich im Abstand zur Fahrzeuglängsachse angeordnet ist und auf der hierzu gegenüberliegenden Seite des Antriebsteils eine von der Fahrzeuglängsachse beabstandete Stützrolle angeordnet ist. Neben derartigen Flurförderzeugen mit einem Vierradfahrwerk sind ebenfalls Flurförderzeuge mit einem Fünfradfahrwerk bekannt, bei denen das Antriebsrad mittig am Antriebsteil befestigt ist und zwei Stützrollen an den Seiten des Antriebsteils beabstandet zur Fahrzeuglängsachse angeordnet sind. Durch die vertikale Bewegbarkeit der Stützrollen kann bei derartigen Flurförderzeugen vermieden werden, dass das Antriebsrad beispielsweise durch Bodenunebenheiten einen Teil der Aufstandskraft verliert, und sichergestellt werden, dass das Antriebsrad zur Übertragung der Antriebskräfte und Bremskräfte mit der Fahrbahn ständig in Kontakt steht.

Derartige Stützrollen an dem Antriebsteil dienen weiterhin zur Erhöhung der seitlichen Stabilität des Flurförderzeugs und sind federnd sowie gedämpft an dem Flurförderzeug aufgehängt.

Bei bekannten Ausführungen derartiger Stützrollen ist die Stützrolle in einer Schwinge um eine horizontale Drehachse drehbar gelagert, wobei die Schwinge um eine Schwenkachse schwenkbar in einem Drehschemel gelagert und aufgehängt ist. Als Abstützelement zur Federung und Dämpfung der Stützrolle an dem Drehschemel ist bei bekannten Stützrollen ein elastisches Kunststoffelement, insbesondere ein Elastomerelement, vorgesehen, das zwischen der Schwinge und dem Drehschemel angeordnet und eingespannt ist.

Ein gattungsgemäßes Flurförderzeug ist aus der DE 42 09 862 A1 bekannt. Die Stützrolle ist hierbei um eine horizontale Drehachse drehbar in einer Schwinge gelagert. Die Schwinge ist um eine Schwenkachse schwenkbar in einem Drehschemel gelagert ist, der um eine vertikale Achse drehbar an dem Flurförderzeug gelagert ist, und hierbei mittels eines elastischen Kunststoffelements an dem Drehschemel federnd abgestützt. Das Kunststoffelement ist dabei zwischen der Schwinge und dem Drehschemel lose eingespannt.

Aufgrund der Einspannung des Kunststoffelements zwischen der Schwinge und dem Drehschemel ist das Kunststoffelement ständig belastet und unter Druck gesetzt. Aufgrund der Materialeigenschaften des elastischen Kunststoffelement und der ständigen Belastung altert und setzt sich das Kunststoffelement stark, wodurch das Kunststoffelement das Feder- und/oder Dämpfungsverhalten verändert und zunehmend verliert, insbesondere die Abstützkraft der Stützrolle sich verringert und der Einfederweg zunimmt, wodurch es im Betrieb des Flurförderzeugs zu einer größeren seitlichen Neigung und somit einer verringerten seitlichen Stabilität des Flurförderzeugs kommen kann. Dadurch ist das Kunststoffelement häufig auszuwechseln oder eine Höhenverstellung der Stützrolle durchzuführen, um die Feder- und Dämpfungseigenschaften der Stützrolle sicherzustellen, wodurch das Flurförderzeug einen hohen Wartungsaufwand aufweist.

Im Betrieb des Flurförderzeugs kommt es bei einer Kurvenfahrt eines Flurförderzeugs mit einem Fünfradfahrwerk an den gegenüberliegenden Stützrollen zu einer Einfederungsbewegung der belasteten Stützrolle und einer Ausfederbewegung der seitlich gegenüberliegenden, entlasteten Stützrolle. Aufgrund der Massenträgkeit der Kunststoffelemente erfolgt jedoch die Ausfederungsbewegung der entlasteten Stützrolle langsam und zeitverzögert, so dass an dieser Stützrolle der Bodenkontakt verloren gehen kann. Das Flurförderzeug wird dadurch zu einem schwingungsfähigen System, wodurch insbesondere im Fahrbetrieb des Flurförderzeugs mit schnell aufeinanderfolgenden Richtungswechseln und Kurvenfahrten es aufgrund dieses Verhaltens der Kunststoffelemente zu Wankbewegungen um die Fahrzeuglängsachse kommen kann, die zu einer verminderten seitlichen Stabilität des Flurförderzeugs führen.

Zudem ist bei bekannten Flurförderzeugen mit Kunststoffelementen an den Stützrollen - wie in der DE 42 09 862 A1 beschrieben - eine Höhenverstellbarkeit der Stützrolle erforderlich, um bei einem Verschleiß des Antriebsrades oder dem Einbau unterschiedlicher Antriebsräder mit verschiedenen Durchmessern die vertikale Position der Stützrolle anzupassen bzw. die oben beschriebenen Alterungs- und Setzungseffekte des Kunststoffelements auszugleichen. Bei der DE 42 09 862 A1 ist hierzu der die Stützrolle halternde Drehschemel mit einem Zapfen in mehreren vertikalen Positionen höhenverstellbar in einer fahrzeugseitigen Buchse befestigbar.

Die Kunststoffelemente an bekannten Stützrollen weisen in der Regel eine steile Kennlinie auf, um entsprechend hohe Druckkräfte und Abstützkräfte an den Stützrollen zur Stabilitätserhöhung des Flurförderzeugs zu erzielen. Die Abstützkräfte der Stützrollen und die Aufstandskraft des Antriebsrades stehen jedoch in einer Wechselbeziehung. Werden die Abstützkräfte der Stützrollen durch eine Einfederbewegung der Stützrollen zu hoch, verringert sich die Radaufstandskraft des Antriebsrades. Aufgrund der steilen Kennlinie und der hohen Druckkräfte der Kunststoffelemente würden bei einem Verschleiß des Antriebsrades oder alterungsbedingten Setzungseffekten des Kunststoffelements und einer entsprechenden Einfederung der Stützrollen mit einer aufgrund der steilen Kennlinie der Kunststoffelemente bedingten starken Zunahme der Abstützkräfte der Stützrollen die Radaufstandskraft am Antriebsrad entsprechend reduziert, so dass ein hoher Schlupf auftritt und eine Übertragung der Antriebskräfte und Bremskräfte durch das Antriebsrad auf die Fahrbahn nicht mehr gewährleistet wäre. Entsprechend führt der Einbau eines Antriebsrades mit vergrößertem Durchmesser durch die dadurch bedingte Ausfederbewegung der Stützrollen zu einer starken Abnahme der Abstützkräfte an den Stürzrädern, die sich hinsichtlich der seitlichen Stabilität des Flurförderzeugs im Betrieb negativ auswirken. Durch eine Höhenverstellung der Stützrollen können diese Effekte ausgeglichen werden. Durch die Höhenverstellbarkeit der Stützrollen erhöht sich jedoch der Bauaufwand für das Flurförderzeug und es entsteht ein zusätzlicher Wartungsaufwand für die Höhenverstellung der Stützrollen.

Der vorliegenden Erfindung liegt die Aufgabe zugrunde, ein Flurförderzeug der eingangs genannten Gattung zur Verfügung zu stellen, bei dem die Federung und Dämpfung der Stützrolle verbessert ist und das hinsichtlich der seitlichen Stabilität und des Wartungsaufwandes sowie des Bauaufwandes verbessert ist.

Diese Aufgabe wird erfindungsgemäß dadurch gelöst, dass zwischen der Schwinge und dem Drehschemel eine metallische Feder, insbesondere eine Stahlfeder, angeordnet ist. Der erfindungsgemäße Gedanke besteht somit darin, zwischen der Schwinge und dem Drehschemel zur Federung und Dämpfung der Stützrolle zusätzlich zu dem elastischen Kunststoffelement eine metallische Feder, insbesondere eine Stahlfeder, zur Federung und Abstützung der Stützrolle vorzusehen. Das Kunststoffelement dient hierbei zur federnden Aufhängung der mit der Stützrolle versehenen Schwinge an dem Drehschemel und zur Dämpfung der Schwingungen der Schwinge um die Schwenkachse. Die zusätzliche metallische Feder dient ebenfalls zur federnden Aufhängung der mit der Stützrolle versehenen Schwinge an dem Drehschemel und somit der Abstützung der Stützrolle an dem Drehschemel, wobei durch die metallische Feder die Druckbelastung des Kunststoffelements verringert wird und somit eine Entlastung des Kunststoffelements erzielt werden kann. Dadurch kann der Alterungs- und Setzungsvorgang des Kunststoffelements durch die metallische Feder kompensiert werden. Durch die zusätzliche metallische Feder weist die Stützrolle eine verbessertes Langzeitfederungsverhalten und Langzeitdämpfungsverhalten auf und der Austausch des Kunststoffelements bzw. die Höhenverstellung der Stützrolle kann entfallen, wodurch der Wartungsaufwand des Flurförderzeugs verringert wird. Zudem wird die seitliche Stabilität des Flurförderzeugs sichergestellt und verbessert, da eine Zunahme des Einfederweges und somit der seitlichen Neigung des Flurförderzeugs durch die metallische Feder und die von der metallischen Feder eliminierten Alterungs- und Setzungsvorgang des Kunststoffelements vermieden wird. Darüber hinaus kann durch die zusätzliche metallische Feder zwischen der Schwinge und dem Drehschemel ein schnelles Ausfedern der Stützrolle bei einer Entlastung der Stützrolle während einer Kurvenfahrt oder einer seitlichen Neigung des Flurförderzeugs erzielt und sichergestellt werden, wodurch der Bodenkontakt der ausfedernden Stützrolle im Fahrbetrieb des Flurförderzeugs, insbesondere bei schnell aufeinanderfolgenden Richtungswechseln und Kurvenfahrten sichergestellt wird. Hierdurch wird eine hohe seitliche Stabilität des Flurförderzeugs erzielt. Durch das Kunststoffelement wird bei einer Belastung der einfedernden Stützrolle während einer Kurvenfahrt oder einer seitlichen Neigung ein langsames und gedämpftes Einfedern der einfedernden Stützrolle mit entsprechender Dämpfung erzielt. Bei einem Flurförderzeug mit einem Fünfradfahrwerk und zwei seitlich beabstandeten Stützrollen wird somit eine Feder-Dämpfer-System erzielt, bei dem an der einfedernden Stützrolle das Kunststoffelement bestimmend für das Einfederverhalten der Stützrolle ist und durch das Kunststoffelement ein gedämpftes, langsames Einfedern erzielt wird und an der ausfedernden Stützrolle die metallische Feder für das Ausfederverhalten der Stützrolle bestimmend ist und durch die metallische Feder ein schnelles Ausfedern sichergestellt wird, wodurch Wankbewegungen des Flurförderzeugs um die Fahrzeuglängsachse sicher und wirksam vermindert und eine hohe seitliche Stabilität des Flurförderzeugs erzielt werden können.

Der wesentliche Vorteil der erfindungsgemäßen Anordnung besteht jedoch darin, dass die Kennlinie des Kunststoffelements aufgrund der Anordnung der metallischen Feder einen flacheren Verlauf aufweisen kann, wodurch die Stützrolle ohne Höhenverstellbarkeit in vertikaler Richtung starr am Flurförderzeug befestigt werden kann. Gemäß einer bevorzugten Weiterbildung der Erfindung ist hierzu der Drehschemel an einem fahrzeugseitigen Lagerbauteil in vertikaler Richtung starr angeordnet und ohne Höhenverstellung am Flurförderzeug befestigt. Hierdurch werden der Bauaufwand und der Wartungsaufwand des erfindungsgemäßen Flurförderzeugs weiter verringert, da bei der erfindungsgemäßen Stützrolle keine Höhenverstellung zum Ausgleich von Verschleiß des Antriebsrades oder unterschiedlichen Durchmessern verschiedener Antriebsräder bzw. zum Ausgleich der Alterungs- und Setzungseffekte des Kunststoffelements erforderlich ist. Die Federrate der metallischen Feder ist hierzu bevorzugt geringer als die Federrate des Kunststoffelements.

Die metallische Feder ist gemäß einer bevorzugten Ausführungsform der Erfindung als Druckfeder ausgebildet. Mit einer Druckfeder zwischen der Schwinge und dem Drehschemel kann auf einfache Weise eine gefederte Aufhängung der Schwinge und somit der Stützrolle und eine zusätzliche Abstützung der Stützrolle erzielt werden, um eine Entlastung des elastischen Kunststoffelements zu erzielen und das Ausfederverhalten der Stützrolle zu bestimmen.

Die metallische Feder ist gemäß einer bevorzugten Ausgestaltungsform der Erfindung als Spiralfeder ausgebildet. Eine als Spiralfeder ausgebildete Druckfeder weist einen einfachen Bauaufwand auf und kann auf einfache Weise zwischen dem Drehschemel und der Schwinge angeordnet werden.

Die Spiralfeder kann hierbei konzentrisch zu dem Kunststoffelement angeordnet werden, wodurch sich einfacher Einbau mit einem geringen Bauraumbedarf ergibt.

Es ist alternativ möglich, die metallische Feder und das Kunststoffelement einstückig auszubilden. Eine derartige vergossene Feder kann auf einfache Weise bei gattungsgemäßen Stützrollen gegen das Kunststoffelement ausgetauscht werden, wodurch sich eine einfache Nachrüstbarkeit erzielen lässt.

Hinsichtlich eines einfachen Aufbaus und Einbaus der zusätzlichen metallischen Feder ergeben sich besondere Vorteile, wenn die metallische Feder gemäß einer bevorzugten Ausführungsform der Erfindung parallel zu dem Kunststoffelement angeordnet ist.

Gemäß einer vorteilhaften Ausgestaltungsform der Erfindung sind zur Abstützung der metallischen Feder und des Kunststoffelements die Schwinge und der Drehschemel mit jeweils einer Abstützplatte versehen. Zwischen den Abstützplatten an der Schwinge und dem Drehschemel können das Kunststoffelement und eine bevorzugt parallel geschaltete und angeordnete metallische Feder auf einfache Weise und bei geringem Bauaufwand und Platzbedarf angeordnet und eingespannt werden.

Sofern zur Halterung der metallischen Feder und/oder des Kunststoffelements die Abstützplatten mit Haltestiften versehen ist, kann die von der Spiralfeder gebildete metallische Feder und/oder ein als rohrförmige Hülse ausgebildetes Kunststoffelement auf einfache Weise an den Abstützplatten sicher befestigt werden.

Gemäß einer bevorzugten Ausführungsform der Erfindung ist das Flurförderzeug mit einem Fünfradfahrwerk versehen, wobei an dem Antriebsteil ein mittig angeordnetes Antriebsrad und zwei seitlich beabstandete Stützrollen angeordnet sind. Bei einem Flurförderzeug mit einem Fünfradfahrwerk kann durch die Kunststoffelemente und die parallel geschalteten metallischen Federn an den seitlich gegenüberliegenden Stützrollen mit geringem Bauaufwand und Bauraumbedarf ein zusammenwirkendes Feder-Dämpfer-System erzielt werden, das von dem das Einfederverhalten der einfedernden Stützrolle bestimmenden Kunststoffelement und der das Ausfederverhalten der ausfedernden Stützrolle bestimmenden metallische Feder gebildet ist, um Wankbewegungen des Flurförderzeugs um die Fahrzeuglängsachse sicher und wirksam zu vermindern und eine hohe seitliche Stabilität des Flurförderzeugs zu erzielen.

Weitere Vorteile und Einzelheiten der Erfindung werden anhand der in den schematischen Figuren dargestellten Ausführungsbeispiele näher erläutert. Hierbei zeigt
- Figur 1: ein erfindungsgemäßes Flurförderzeug in einer perspektivischen Ansicht,
- Figur 2: die Stützrolle in einer vergrößerten Seitenansicht,
- Figur 3: den Schnitt der Stützrolle entlang der Linie A-A der Figur 2,
- Figur 4: den Schnitt der Stützrolle entlang der Linie B-B der Figur 2 und
- Figur 5: eine Draufsicht auf die gefederte/gedämpfte Aufhängung der Stützrolle.

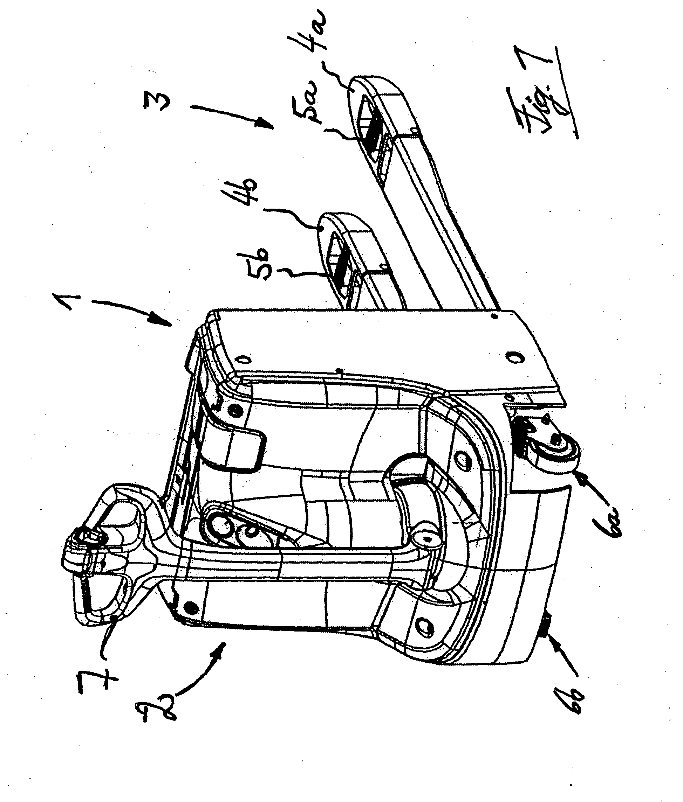

In Figur 1 ist ein gattungsgemäßes, als Hubwagen ausgebildetes Flurförderzeug 1 in einer perspektivischen Ansicht dargestellt. Das Flurförderzeug 1 weist einen Antriebsteil 2 und einen relativ zu dem Antriebsteil 2 anhebbaren Lastteil 3 auf. Der Lastteil 3 weist zwei seitlich beabstandete Lastarme 4a, 4b auf, die sich mit jeweils mindestens einer Lastrolle 5a, 5b auf einer Fahrbahn abstützen.

In dem Antriebsteil 1 befinden sich die für den Antrieb des Flurförderzeugs erforderlichen Aggregate, beispielsweise ein elektrischer Fahrantriebsmotor, ein elektrischer Pumpenmotor und eine Hydraulikpumpe zur Versorgung einer hydraulischen Hubvorrichtung.

Im Bereich des Antriebsteils 2 steht das Flurförderzeug 1 mit einem lenkbaren, in der dargestellten Ansicht nicht ersichtlichen Antriebsrad und mit mindestens einer Stützrolle 6a, 6b auf der Fahrbahn auf. Die Lenkung des Antriebsrads erfolgt mittels einer Lenkdeichsel 7 um eine vertikale Achse des Antriebsrades.

Das erfindungsgemäße Flurförderzeug 1 weist ein Fünfradfahrwerk auf, wobei das Antriebsrad mittig bezüglich des Antriebsteils 2 angeordnet ist und die beiden Stützrollen 6a, 6b jeweils in seitlicher Richtung beabstandet zu dem Antriebsrad angeordnet sind.

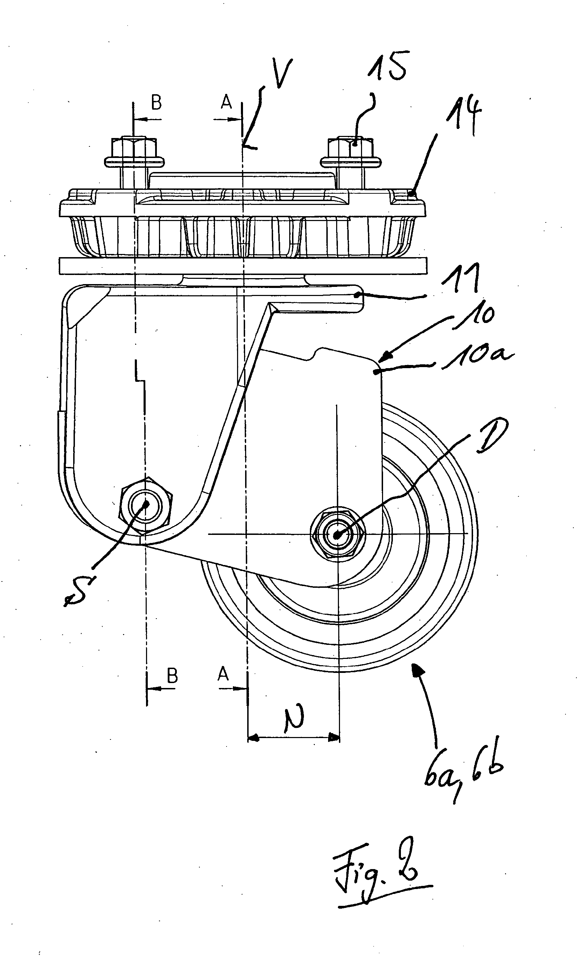

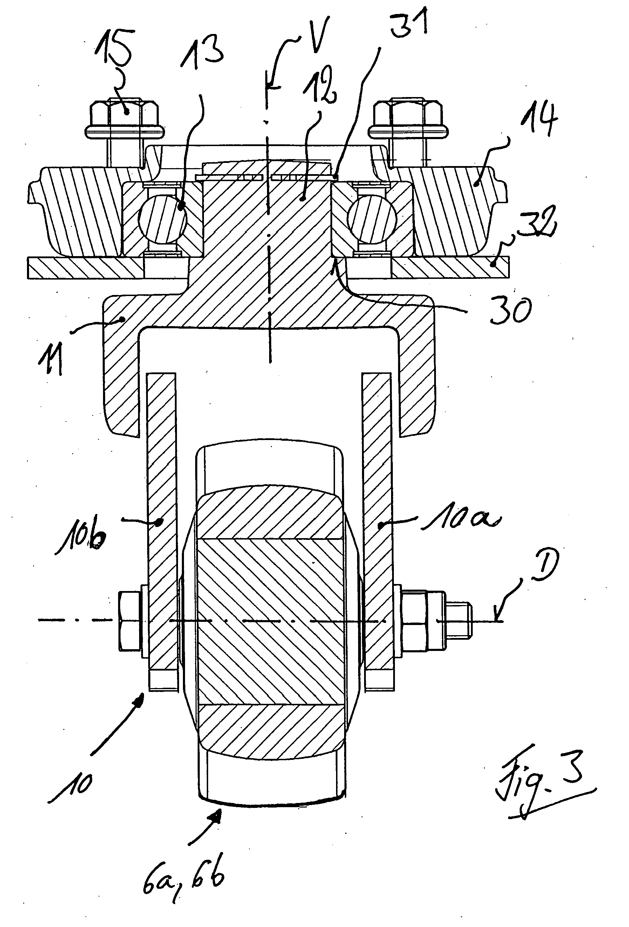

In der Figur 2 ist die Stützrolle 6a, 6b in einer vergrößerten Darstellung dargestellt. Die Stützrolle 6a bzw. 6b ist um eine horizontale Drehachse D drehbar in einer Schwinge 10 gelagert ist. Die Schwinge 10 ist hierbei - wie aus der Figur 3 ersichtlich ist - von zwei seitlich beabstandeten Halteplatten 10a, 10b gebildet, zwischen denen die Stützrolle 6a bzw. 6b drehbar angeordnet ist. Die von den beiden Halteplatten 10a, 10b gebildete Schwinge 10 ist um eine horizontale Schwenkachse S schwenkbar in einem Drehschemel 11 gelagert, der um eine vertikale Achse V drehbar an dem Flurförderzeug gelagert ist.

Die Drehachse D ist hierbei von der vertikalen Achse V in Längsrichtung um den Abstand N beabstandet, so dass die Stützrolle 6a, 6b als Nachlaufrolle ausgebildet ist, die ihre Laufrichtung automatisch an die momentane Fahrtrichtung des Flurförderzeugs anpassen.

Der Drehschemel 11 ist mit einem Lagerzapfen 12 versehen, der mittels eines als Wälzlagers ausgebildeten Lagers 13 in einem feststehenden fahrzeugseitigen Lagerbauteil 14 um die vertikale Achse V drehbar gelagert ist. An dem Lagerzapfen 12 ist ein Wellenabsatz 30 im Bereich der Unterseite des Wälzlagers 13 ausgebildet und im Bereich der Oberseite des Wälzlagers 13 eine Nut zur Aufnahme eines Sicherungsringes als Befestigungsmittel 31 des Zapfens 12 und somit des Drehschemels 11 an dem Wälzlager 13 vorgesehen. Das Wälzlager 13 ist mittels einer Halteplatte 32 in dem Lagerbauteil 14 befestigt. Das Lagerbauteil 14 ist mittels eines beispielsweise von Verschraubungen 15 gebildeten Befestigungsmittels an dem Antriebsteil 2 des Flurförderzeugs 1 befestigbar. Die erfindungsgemäße Stützrolle 6a, 6b ist somit mit dem Drehschemel 11 in vertikaler Richtung starr an dem Lagerbauteil 14 angeordnet und somit ohne Höhenverstellung am Flurförderzeug 1 befestigt.

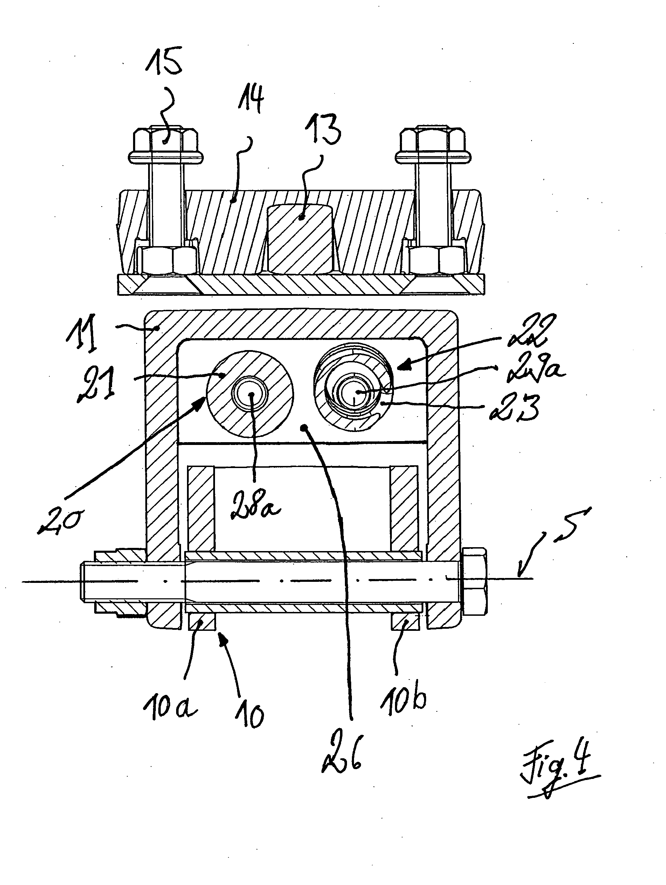

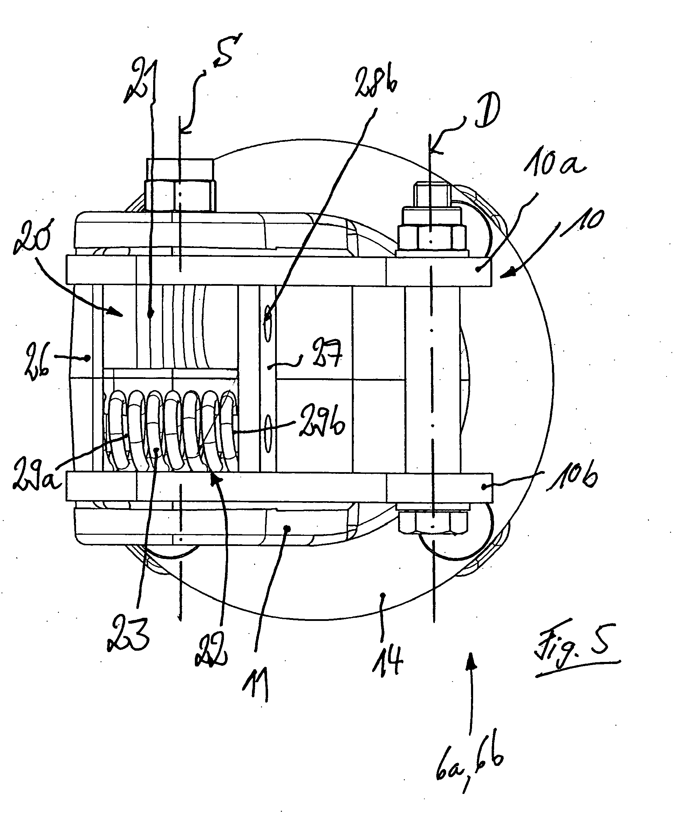

Zur gefederten und gedämpften Aufhängung der Schwinge 10 an dem Drehschemel 11 um die horizontale Schwenkachse S ist zwischen der Schwinge 10 und dem Drehschemel 11 - wie aus den Figuren 4 und 5 ersichtlich ist - ein als rohrförmige Hülse 21 ausgebildetes elastisches Kunststoffelement 20 und erfindungsgemäß eine parallel geschaltete, als Stahlfeder ausgebildete metallische Feder 22 angeordnet, die von einer als Spiralfeder 23 ausgebildeten Druckfeder gebildet ist. Die Stahlfeder 23 ist hierbei - wie in der Figur 5 gezeigt ist - seitlich neben dem Kunststoffelement 20 angeordnet und somit dem Kunststoffelement 20 parallel geschaltet.

Zur Abstützung des Kunststoffelements 20 und der parallel angeordneten Spiralfeder 23 ist der Drehschemel 11 mit einer als Querplatte ausgebildeten Abstützplatte 26 versehen und sind die beiden Halteplatten 10a, 10b der Schwinge 10 mit einer als Querplatte ausgebildeten Abstützplatte 27 verbunden. Das Kunststoffelement 20 und die Spiralfeder 23 sind zwischen den beiden Abstützplatten 26, 27 angeordnet und eingespannt. Zur Halterung des Kunststoffelements 20 zwischen den Abstützplatten 26, 27 ist jede Abstützplatte 26, 27 mit einem Haltestift 28a, 28b versehen, auf die das von der rohrförmigen Hülse 21 gebildete Kunststoffelement 21 aufsteckbar und somit zwischen den Abstützplatten 26, 27 lose eingelegt ist. Entsprechend ist zur Halterung der Spiralfeder 23 zwischen den Abstützplatten 26, 27 jede Abstützplatte mit einem Haltestift 29a, 29b versehen, auf die die Spiralfeder 23 aufsteckbar ist.

Das von einem Elastomer gebildete Kunststoffelement 20 übernimmt die gefederte und gedämpfte Aufhängung der Schwinge 10 an dem Drehschemel 11, wobei mit dem Kunststoffelement 20 die Schwingungen der Schwinge 10 und somit der Stützrolle 6a, 6b um die Schwenkachse S gedämpft werden können. Bei einer Einfederung der Stützrolle 6a bzw. 6b während einer Kurvenfahrt oder einer seitlichen Neigung des Flurförderzeugs wird das Einfederverhalten der Stützrolle 6a, 6b durch das Kunststellelement 20 wesentlich bestimmt und durch dessen Dämpfung eine langsames Einfederverhalten der belasteten Stützrolle 6a, 6b erzielt.

Die zu dem Kunststoffelement 20 parallel geschaltete, als Druckfeder ausgebildete Spiralfeder 23 übernimmt ebenfalls die gefederte Aufhängung der Schwinge 10 an dem Drehschemel 11 und entlastet das Kunststoffelement 20, wodurch Alterungseffekte und Setzungseffekte des Kunststoffelements 20 auf einfache Weise kompensiert werden können und die Feder- und Dämpfungseigenschaften der Schwenkrolle 6a, 6b bei geringem Wartungsaufwand sichergestellt werden können. Zudem wird durch die zusätzliche metallische Feder 22 die seitliche Stabilität des Flurförderzeugs verbessert, da eine Zunahme des Einfederweges der Stützrolle 6a, 6b durch Setzungseffekte an dem Kunststoffelement 20 vermieden wird.

Bei einer Ausfederung der Stützrolle 6a bzw. 6b während einer Kurvenfahrt oder einer seitlichen Neigung des Flurförderzeugs wird von der parallel geschalteten und als Druckfeder ausgebildeten Spiralfeder 23 das Ausfederverhalten der Stützrolle 6a, 6b wesentlich bestimmt und ein schnelles Ausfedern der entlasteten Stützrolle 6a, 6b erzielt und ein Bodenkontakt der ausfedernden Stützrolle 6a, 6b sichergestellt, so dass eine Dreipunktauflage des Antriebsteils 2 mit dem mittig angeordneten Antriebsrad und den beiden seitlichen Stützrollen 6a, 6b gewährleistet wird.

An den beiden seitlich gegenüberliegenden Stützrollen 6a, 6b wird somit an der einfedernden Stützrolle 6a bzw. 6b durch das Kunststoffelement 20 ein Dämpfer und an der ausfedernden Stützrolle 6b bzw. 6a durch die metallische Feder 22 ein Feder-Dämpfer-System des Flurförderzeugs 1 erzielt, wodurch Wankbewegungen des Flurförderzeugs 1 um die Fahrzeugslängsachse wirksam vermieden werden können und die seitliche Stabilität des Flurförderzeugs mit geringem Bauaufwand verbessert wird.

Durch die erfindungsgemäße Anordnung des Kunststoffelements 20 und der metallischen Feder 22 zwischen den Abstützplatten 26, 27 an dem Drehschemel 11 und der Schwinge 10 ist ein geringer Bauraumbedarf und Bauaufwand erzielbar. Gegenüber Stützrollen des Standes der Technik kann durch die erfindungsgemäße Parallelschaltung der metallischen Feder 22 weiterhin das Kunststoffelement 20 mit einer flacheren Kennlinie versehen werden, wodurch die Stützrolle 6a, 6b mit dem Drehschemel 11 ohne Höhenverstellung an dem Antriebsteil 2 in vertikaler Richtung starr und unverstellbar angeordnet werden kann, wodurch sich der Bauaufwand und Wartungsaufwand des erfindungsgemäßen Flurförderzeugs 1 weiter reduziert.

## Patentansprüche

1. Flurförderzeug, insbesondere Hubwagen, mit einem Antriebsrad und zumindest einer von dem Antriebsrad seitlich beabstandeten Stützrolle, wobei die Stützrolle um eine horizontale Drehachse drehbar in einer Schwinge gelagert ist, die um eine Schwenkachse schwenkbar in einem Drehschemel gelagert ist, und die Stützrolle mittels eines elastischen Kunststoffelements, insbesondere eines Elastomerelements, an dem Drehschemel federnd abgestützt ist, wobei das Kunststoffelement zwischen der Schwinge und dem Drehschemel angeordnet ist, **dadurch gekennzeichnet, dass** zwischen der Schwinge (10) und dem Drehschemel (11) eine metallische Feder (22), insbesondere eine Stahlfeder, angeordnet ist.

2. Flurförderzeug nach Anspruch 1, **dadurch gekennzeichnet, dass** der Drehschemel (11) an einem Lagerbauteil (14) in vertikaler Richtung starr angeordnet und ohne Höhenverstellung am Flurförderzeug (1) befestigt ist.

3. Flurförderzeug nach Anspruch 1 oder 2, **dadurch gekennzeichnet, dass** die metallische Feder (22) als Druckfeder ausgebildet ist.

4. Flurförderzeug nach einem der Ansprüche 1 bis 3, **dadurch gekennzeichnet, dass** die metallische Feder (22) als Spiralfeder (23) ausgebildet ist.

5. Flurförderzeug nach einem Anspruch 4, **dadurch gekennzeichnet, dass** die Spiralfeder (22) konzentrisch zu dem Kunststoffelement (20) angeordnet ist.

6. Flurförderzeug nach einem der Ansprüche 1 bis 4, **dadurch gekennzeichnet, dass** die metallische Feder (22) und das Kunststoffelement (20) einstückig ausgebildet sind.

7. Flurförderzeug nach einem der Ansprüche 1 bis 4, **dadurch gekennzeichnet, dass** die metallische Feder (22) parallel zu dem Kunststoffelement (20) angeordnet ist.

8. Flurförderzeug nach einem der Ansprüche 1 bis 7, **dadurch gekennzeichnet, dass** zur Abstützung der metallischen Feder (22) und des Kunststoffelements (20) die Schwinge (10) und der Drehschemel (11) mit jeweils einer Abstützplatte (26; 27) versehen sind.

9. Flurförderzeug nach Anspruch 8, **dadurch gekennzeichnet, dass** zur Halterung der metallischen Feder (22) und/oder des Kunststoffelement (20) die Abstützplatten (26; 27) mit Haltestiften (28a, 28b; 29a, 29b) versehen sind.

10. Flurförderzeug nach einem der Ansprüche 1 bis 9, **dadurch gekennzeichnet, dass** das Flurförderzeug (1) mit einem Fünfradfahrwerk versehen ist, wobei an dem Antriebsteil (2) ein mittig angeordnetes Antriebsrad und zwei seitlich beabstandete Stützrollen (6a, 6b) angeordnet sind.
